# EUROPÄISCHE PATENTSCHRIFT

(11) **EP 1 588 078 B1**
(45) Veröffentlichungstag und Bekanntmachung des Hinweises auf die Patenterteilung: **29.08.2007**
(21) Anmeldenummer: 04704185.0
(22) Anmeldetag: 22.01.2004
(51) Int. Cl.: F16H 61/46, B60K 31/10

(54) **HYDROSTATISCHES GETRIEBE**
HYDROSTATIC TRANSMISSION
TRANSMISSION HYDROSTATIQUE

(30) Priorität: 28.01.2003 DE 10303206
(43) Veröffentlichungstag der Anmeldung: 26.10.2005
(73) Patentinhaber: ZF FRIEDRICHSHAFEN AG, 88038 Friedrichshafen (DE)
(72) Erfinder: BERG, Torsten, 01920 Steina (DE); LEGNER, Jürgen, 88048 Friedrichshafen (DE); GEIS, Jörg, 88677 Markdorf (DE)
(86) Internationale Anmeldenummer: PCT/EP2004/000492
(87) Internationale Veröffentlichungsnummer: WO 2004/068005

(56) Entgegenhaltungen:
- EP-A- 0 530 842
- WO-A-02/48581
- WO-A-02/057662
- DE-A- 4 312 716
- DE-A- 19 505 691
- DE-A- 19 513 806
- DE-A- 19 524 669
- US-A- 6 138 069
- PATENT ABSTRACTS OF JAPAN Bd. 0170, Nr. 41 (M-1359), 26. Januar 1993 (1993-01-26) & JP 4 258570 A (KUBOTA CORP), 14. September 1992 (1992-09-14)
- PATENT ABSTRACTS OF JAPAN Bd. 0185, Nr. 26 (M-1683), 5. Oktober 1994 (1994-10-05) & JP 6 183282 A (MAZDA MOTOR CORP), 5. Juli 1994 (1994-07-05)

## Beschreibung

Die Erfindung bezieht sich auf ein hydrostatisches Getriebe nach der im Oberbegriff von Anspruch 1 näher definierten Art.

Gattungsgemäße hydrostatische Getriebe, wie aus der DE 43 12 716 bekannt, werden beispielsweise in Baumaschinen, wie Radbagger, zum Antrieb des mobilen Fahrzeugs verwendet. Hierbei wird eine hydraulische Pumpe mit einem hydraulischen Motor im offenen Kreislauf betrieben, wobei die hydraulische Pumpe Druckflüssigkeit aus einem Druckflüssigkeitsreservoir entnimmt und diese über eine Arbeitsleitung dem hydraulischen Motor zuführt. Häufig ist dem hydraulischen Motor ein schaltbares Getriebe nachgeordnet. Der Druckflüssigkeitsstrom, welcher den Hydraulikmotor verläßt, kann über Druckbegrenzungsventile begrenzt werden, um ein unzulässiges Beschleunigen des Fahrzeugs bei einer Fahrt hangabwärts zu verhindern. Hierbei begrenzt das Bremsventil den Druckflüssigkeitsstrom des Hydromotors so, dass sich in der rückfließenden Arbeitsleitung ein hydraulischer Druck aufbaut, welcher zusammen mit dem eingestellten Schluckvolumen des Hydromotors ein Bremsmoment erzeugt. Dieses Bremsmoment verändert sich durch die Veränderung des Schluckvolumens des Hydromotors und wirkt, je nach Untersetzung des nachgeschalteten Getriebes und somit des eingelegten Ganges, auf die Antriebsräder. Ist das minimale Schluckvolumen des Hydromotors eingestellt und die Hangabtriebskraft, welche durch die Steigung des Hangs auf das Fahrzeug wirkt, übersteigt das mögliche Bremsmoment, welches der Hydromotor mit Hilfe der Bremsventile erzeugt, so kann es zu gefährlichen Fahrsituationen kommen.

Die EP 0 530 842 B1 offenbart ein reversierbares hydrostatisches Getriebes mit Bremsventil, bei welchem das Schluckvolumen des Hydromotors in Abhängigkeit von dem durch das Bremsventil erzeugten hydraulischen Druck verstellt wird. Somit wird der Hydromotor bei Fahrt in starkem Gefälle auf sein maximales Schluckvolumen ausgeschwenkt, wodurch ein maximal zu erzeugendes Bremsmoment-des Hydromotors erzeugt wird. Da die Verstellung des Hydromotors ausschließlich in Abhängigkeit des von dem Bremsventil erzeugten Staudrucks erfolgt, ist es nicht möglich, die durch dieses Bremsmoment erzeugte Verzögerung zu beeinflussen. Auch wirkt sich diese Verzögerung, je nach eingestellter Untersetzung des nachgeschalteten Untersetzungsgetriebes, unterschiedlich auf das Fahrzeug aus.

Vorliegender Erfindung liegt die Aufgabe zugrunde, ein hydrostatisches Getriebe zu schaffen, welches das Fahrzeug auch im Schubbetrieb in keine unzulässigen Fahrsituationen bringt.

Die Aufgabe wird mit einem, auch die kennzeichnenden Merkmale des Hauptanspruchs aufweisenden, gattungsgemäßen hydrostatischen Getriebe gelöst.

Erfindungsgemäß wird der Hydromotor von einer elektronischen Steuereinheit so angesteuert, dass sein Schluckvolumen derart verstellt wird, dass ein geforderter Geschwindigkeitswunsch mit dem Fahrzeug erreicht wird. Hierzu wird der Geschwindigkeitswunsch der elektronischen Steuereinheit zugeführt, welcher beispielsweise aus der Fahrpedalstellung oder der Stellung des Hauptsteuerventils oder mit Hilfe eines Drucksensors im Steuerdruck des Fahrpedals zum Hauptsteuerventil oder einem Drehwinkelgeber am Fahrpedal ermittelt wird. Des weiteren erhält die elektronische Steuerung ein Signal, welches der Fahrzeuggeschwindigkeit entspricht, welche beispielsweise einer Abtriebsdrehzahl des Getriebes oder der Hydromotordrehzahl in Kombination mit der Untersetzung des Schaltgetriebes entnommen werden kann. Das minimale Schluckvolumen des Motors wird nicht mechanisch begrenzt. Weicht die gemessene Fahrzeuggeschwindigkeit von der gewünschten Fahrzeuggeschwindigkeit ab, so wird das Schluckvolumen des Hydromotors so verstellt, dass die gewünschte Fahrzeuggeschwindigkeit der tatsächlichen Fahrzeuggeschwindigkeit entspricht. Hierzu wird ein steuerdruckabhängig verstellbarer oder ein elektrisch proportional verstellbarer Hydromotor mit überlagerter Druckregelung verwendet. An dem Motor ist ein Bremsventil angebaut, und es befinden sich zwischen dem Motor und dem Bremsventil sekundär wirkende Druckbegrenzungsventile. Im Beschleunigungsvorgang, dem Zugbetrieb, wird das Steuersignal der elektronischen Steuerung zum Hydromotor entsprechend der aktuellen Dieselmotor-Drehzahl und der Fahrpedalstellung, somit dem Volumenstrom, so eingestellt, dass damit die entsprechend mögliche Geschwindigkeit erreicht werden kann, d. h., das Signal ist voreilend.

Der Hydromotor verstellt sein Schluckvolumen entsprechend dem Regeldruck, welcher sich aus der gegebenen Druckflüssigkeitsmenge und der verfügbaren Fahrleistung ergibt. Nähert sich die aktuelle Geschwindigkeit der Soll-Geschwindigkeit, wird, abhängig von der aktuellen Fahrzeugbeschleunigung und/oder der abgeleiteten Differenz von Soll- und Ist-Geschwindigkeit (Kennfeld), das Steuersignal zum Hydromotor entsprechend angepaßt, damit die Abweichung von Soll- und Ist-Geschwin-digkeit möglichst klein ist. Dasselbe Kennfeld wird auch dann verwendet, wenn die aktuelle Geschwindigkeit größer als die Soll-Geschwindigkeit ist.

Weist das Fahrzeug eine höhere Ist-Geschwindigkeit gegenüber der Soll-Geschwindigkeit auf, welche beispielsweise durch eine Hangabwärtsfahrt oder die Veränderung des Fahrpedals auf geringere Geschwindigkeit entsteht, so steuert die elektronische Steuerung den Hydromotor so an, dass dieser auf ein größeres Schluckvolumen verstellt wird, wodurch die Geschwindigkeit verringert wird. Sinkt hierdurch der Zulaufdruck zum Hydromotor unter einen definierten Wert, so beginnt das Bremsventil zu schließen, wodurch am Hydromotor ablaufseitig ein hydraulischer Druck aufgebaut wird, welcher in Verbindung mit dem eingestellten Schluckvolumen des Hydromotors einen Bremsdruck und somit ein Bremsmoment erzeugt. Durch den Grad der Schluckvolumenverstellung im Bremsbetrieb besteht die Möglichkeit, den Grad der Verzögerung zu beeinflussen. Die Schluckvolumenverstellung wird im Bremsbetrieb in Abhängigkeit von der Abweichung zwischen dem Soll-Wert der Verzögerung, welche die elektronische Steuerung einem abgespeicherten Kennfeld entnimmt, und dem Verzögerungs-Ist-Wert elektronisch geregelt. Es besteht die Möglichkeit, mehrere Grenzwerte, beispielsweise "Hart", "Mittel" und "Weich", für die Soll-Wert-Verzögerung zu wählen. Die Ist-Verzögerung ermittelt die elektronische Steuerung aus der Änderung der Abtriebsdrehzahl. Somit wird, unabhängig von der geschalteten Untersetzung des nachgeschalteten Untersetzungsgetriebes, immer die gleiche Verzögerung eingeregelt. Es besteht die Möglichkeit, die elektronische Steuerung so auszuführen, dass automatisch die Verzögerung "Hart" eingestellt wird, wenn gleichzeitig der Fahrer die Betriebsbremse betätigt. Hierdurch werden die Betriebsbremsen weniger stark belastet.

In einer weiteren Ausgestaltungsform befindet sich ein Temperatursensor im Hydrauliktank, mit dessen Signal bei Übertemperatur die zulässige Fahrgeschwindigkeit reduziert wird. In einer weiteren Ausgestaltungsform besteht die Möglichkeit, bei der Warmlaufphase im Winterbetrieb die maximale Geschwindigkeit zu begrenzen, bis die Betriebstemperatur erreicht ist.

In einer weiteren Ausgestaltungsform besteht die Möglichkeit, die Geschwindigkeit in Abhängigkeit der Ölqualität zu begrenzen.

In einer weiteren Ausgestaltungsform besteht die Möglichkeit, das Schluckvolumen des Hydromotors in seinem maximalen Schluckvolumen zu halten, solange sich das Fahrzeug in der Stellung für den Kriechgang befindet.

Der Übergang vom normalen Fahrzustand in den Kriechgang wird entsprechend der vorgewählten Verzögerung übergeleitet.

Indem bei dem hydrostatischen Getriebe ein steuerdruckabhängig verstellbarer Hydromotor oder ein elektrisch proportional verstellter Hydromotor mit überlagerter Druckregelung verwendet wird, besteht die Möglichkeit, im Zugbetrieb, bei welchem der an der Druckregelung eingestellte Hochdruck überschritten wird, den Hydromotor automatisch auf ein größeres Schluckvolumen zu verstellen. Hierdurch ist gewährleistet, dass das Fahrzeug die benötigte Zugkraft erbringen kann.

Durch das erfindungsgemäße hydrostatische Getriebe besteht somit die Möglichkeit, unabhängig von der Druckflüssigkeitstemperatur, der Druckflüssigkeitsmenge sowie nachgeschalteten Untersetzungsstufen, die vorgegebene Fahrzeugverzögerung oder -beschleunigung zu erreichen. Ebenso ist sichergestellt, dass auch bei Talabfahrt keine fahrkritischen Zustände auftreten können.

Weitere Merkmale sind der Figuren-Beschreibung zu entnehmen.
Es zeigen:

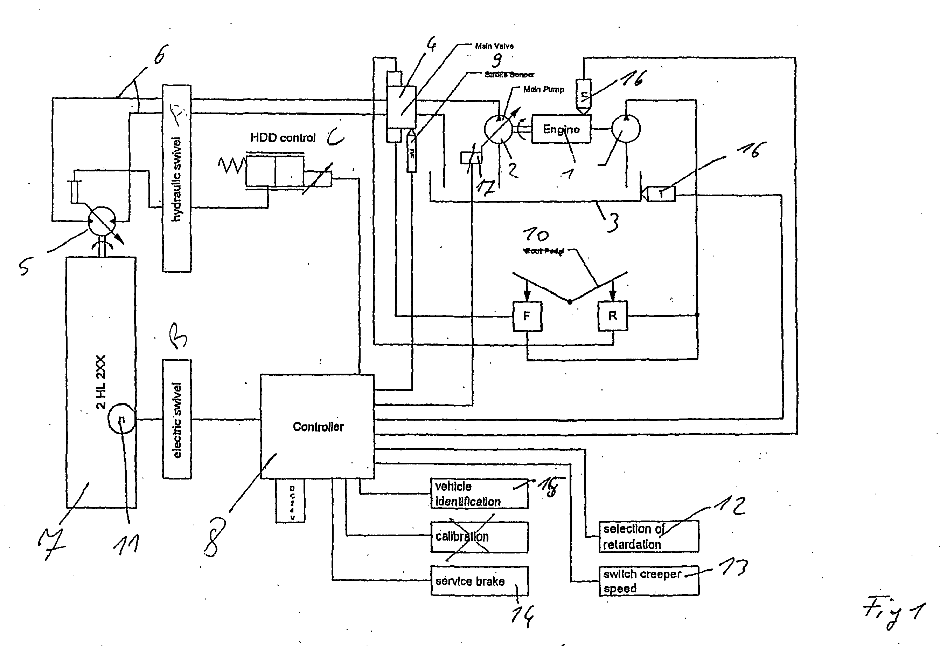

- Fig. 1: ein Block-Diagramm des hydrostatischen Getriebes und
- Fig. 2: ein Diagramm der Hydromotorverstellung.

Fig. 1:
   Eine Antriebsmaschine 1 treibt eine Hydropumpe 2 an, welche Druckflüssigkeit aus einem Druckflüssigkeitsreservoir 3 entnimmt. Die Hydropumpe 2 ist über ein Hauptsteüerventil 4 mit dem Hydromotor 5 verbunden. Der Hydromotor 5 ist über zwei Arbeitsleitungen 6 mit dem Hauptsteuerventil 4 verbunden, welches, je nach Auslenkung, eine Arbeitsleitung mit der Hydropumpe 2 und eine Arbeitsleitung mit dem Druckflüssigkeitsreservoir 3 verbindet. Der Hydromotor 5 ist ein steuerdruckabhängig verstellbarer Hydromotor mit überlagerter Druckregelung, welcher ein nicht dargestelltes Bremsventil und sekundär, nicht dargestellte, wirkende Druckbegrenzungsventile aufweist. Dem hydraulischen Motor 5 ist ein schaltbares Untersetzungsgetriebe 7 nachgeschaltet angeordnet, welches mit den Fahrzeugrädern in Verbindung steht. Eine elektronische Steuereinheit 8 erhält über einen Sensor 9 die Auslenkung des Hauptsteuerventils 4, welches direkt mit einem Fahrpedal 10 in Verbindung steht. Über einen Drehzahlsensor 11 erhält die elektronische Steuereinheit 8 das Abtriebsdrehzahlsignal, welches einer Fahrgeschwindigkeit des Fahrzeugs entspricht. Zusätzlich ist die elektronische Steuereinheit 8 mit einem Verzögerungswählschalter 12, mit welchem beispielsweise drei Verzögerungsstufen "Weich", "Mittel", "Hart" gewählt werden können, sowie einem Kriechgangschalter 13, bei dessen Aktivierung die elektronische Steuereinheit 8 das Schluckvolumen des Hydromotors 5 auf sein maximales-Schluckvolumen einstellt, einem Bremsschalter 14, bei dessen Betätigung die elektronische Steuereinheit 8 automatisch auf die Verzögerung "Hart" eingestellt wird, sowie einer Eingabemöglichkeit 15, bei welcher Fahrzeugdaten definiert werden, verbunden. Ein Temperatursensor 16 ermittelt die Temperatur im Druckflüssigkeitsreservoir 3, wodurch die elektronische Steuereinheit 8 in Abhängigkeit von dieser Temperatur das Schluckvolumen des Hydromotors 5 einstellt. Über einen Drehzahlsensor 16 und einen Sensor 17 ermittelt die elektronische Steuereinheit 8 den Förderstrom der Hydropumpe 2.

Die elektronische Steuereinheit und das Hydromotor-Steuerventil können auch im Unterwagen angeordnet sein.

Somit besteht die Möglichkeit, den Hydromotor 5 so zu verstellen, dass die Geschwindigkeit des Fahrzeugs der Wunschgeschwindigkeit, welche vom Fahrer über das Fahrpedal eingestellt wird, erreicht. Ebenso verzögert das Fahrzeug, unabhängig von der geschalteten Untersetzung des Untersetzungsgetriebes 7, gleichmäßig mit einer von dem Fahrer definierbaren Verzögerung "Hart", "Mittel" oder "Weich".
Fig. 2:
   Im Diagramm ist dargestellt, wie die Geschwindigkeitsregelung stattfindet. Der Fahrerwunsch und somit die Soll-Fahrgeschwindigkeit wird aus der Fahrpedalposition oder der Stellung des Hauptsteuerventils oder mit Hilfe eines Drucksensors im Steuerdruck des Fahrpedals und der Verbrennungsmotordrehzahl ermittelt. Auf der Ordinate ist die Differenz zwischen Ist- und Soll-Geschwindigkeit aufgetragen. Auf der Abszisse ist das Schluckvolumen des Hydromotors aufgetragen. In diesem Kennfeld sind, abhängig von der aktuellen Beschleunigung, welche aus der gemessenen Hydromotor- und Abtriebsdrehzahl mit der aktuellen Übersetzung des Untersetzungsgetriebes errechnet wird, verschiedene Kennlinien eingetragen. Der Kleinstwert des Hydromotor-Scluckvolumens, beispielsweise 54,50 cm³/U, entspricht dem theoretisch notwendigen, minimalen Schluckvolumen, um bei maximaler Verbrennungsmotordrehzahl und vollständig betätigtem Fahrpedal die maximale Fahrgeschwindigkeit, welche abhängig von der Geschwindigkeitsklasse des Fahrzeugs, beispielsweise 20,25 km/h oder 34,00 km/h, ist, zu erreichen. Der Größtwert des Hydromotor-Schluckvolumens ist entweder das maximale Schluckvolumen des verwendeten Hydromotors bzw. ein reduzierter Wert, wenn dabei das maximal zulässige Antriebsdrehmoment im Schubbetrieb für das Getriebe überschritten würde. Ist die aktuelle Fahrzeugbeschleunigung positiv und sehr hoch, beispielsweise a = 2, was der Linie 18 entspricht und beispielsweise während einer Beschleunigungsfahrt in eine Gefällstrecke auftritt, wird das Hydromotor-Schluckvolumen q_HM bereits 4 km/h vor der Soll-Geschwindigkeit vergrößert, damit einem Übertouren vorgehalten werden kann. Ist die aktuelle Fahrzeugbeschleunigung nahezu Null, a = 0, was der Linie 19 entspricht und beispielsweise in der Ebene auftritt, wird das Hydromotor-Schluckvolumen q_HM bis zur Erreichung der Soll-Geschwindigkeit nicht verändert. Steigt die Geschwindigkeit v_Ist über die Soll-Geschwindigkeit v_Soll, wird das Hydromotor-Schluckvolumen q_HM anfänglich sehr geringfügig erhöht und bei weiter steigender Ist-Geschwindigkeit v_Ist exponentiell erhöht. Dies verhindert Schwingungen beim Fahren in der Ebene. Ist die aktuelle Fahrzeugbeschleunigung negativ, beispielsweise a = -2, was in der Linie 20 dargestellt ist, so bleibt das Hydromotor-Schluckvolumen q_HM bis zu einer Geschwindigkeitsüberschreitung von beispielsweise 4 km/h unverändert und steigt bei weiter steigender Ist-Geschwindigkeit v_Ist bis auf den maximalen Wert an. Zwischenwerte können interpoliert werden.

Bei Verwendung eines nachgeschalteten Untersetzungsgetriebes mit zwei Gängen besteht folgende Möglichkeit: Für den ersten Gang existiert ein einziges Kennfeld für alle Fahrzeuggeschwindigkeitsklassen, beispielsweise 20 km/h, 25 km/h, 34 km/h Maximalgeschwindigkeit, d. h., im ersten Gang ist die maximale Arbeitsgeschwindigkeit gleich. Für den zweiten Gang existiert für jede Geschwindigkeitsklasse ein Kennfeld. Dieses Kennfeld oder die Funktion ist in der elektronischen Steuerung abgelegt.

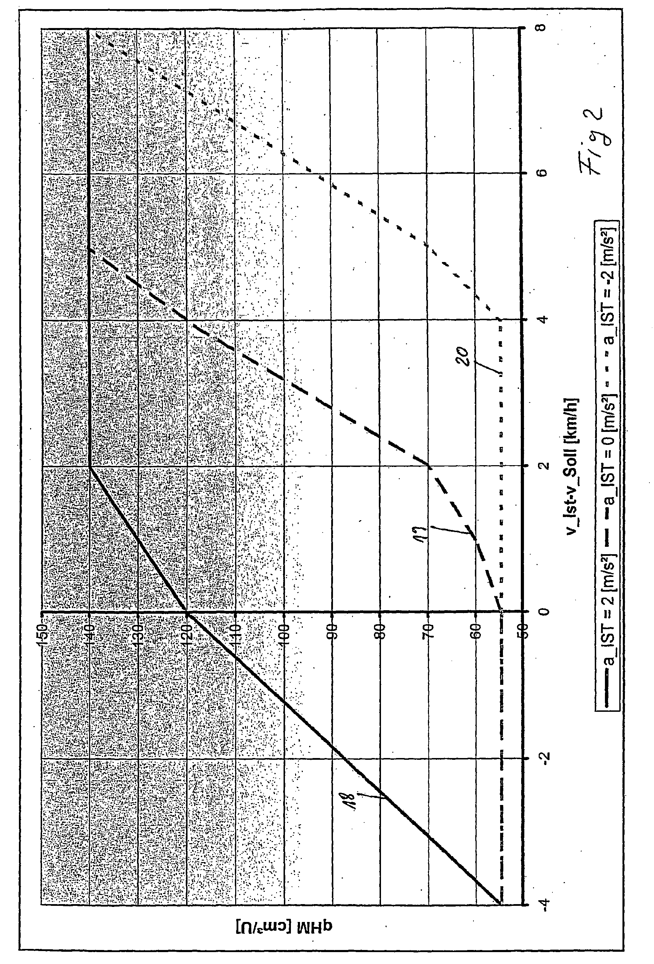

Der in Fig. 2 enthaltene kleinste Wert für das Hydromotor-Schluckvolumen q_HM, welches so klein ist, dass die maximale Fahrzeuggeschwindigkeit v_max in jedem Fall auch bei unterschiedlichen Toleranzen erreicht werden kann, wird theoretisch errechnet (= f(Q_Fahren, n_soll)). Somit ist es nicht notwendig, im Fahrzeug zu kalibrieren.
Durch eine adaptive Regelung wird das tatsächliche, minimal notwendige Hydromotor-Schluckvolumen q_HM ermittelt. In stationären Betriebszuständen, beispielsweise wenn der Verbrennungsmotor bei seiner maximalen Drehzahl betrieben wird, das Fahrpedal voll betätigt und/oder die aktuelle Beschleunigung nahezu Null und die Ist-Geschwindigkeit größer der Soll-Geschwindigkeit ist, wird der kleinste Hydromotor-schluckvolumenwert q_HM-Wert im Kennfeld so lange vergrößert, bis die Regelabweichung nahezu Null.wird. Durch diese adaptive Regelung werden vorhandene Toleranzen, wie beispielsweise die Einstellung der Pumpe, Einstellung der Mengenregelung im Hauptschieber, Kennung des Steuerdruckkolbenhubs des Hauptschiebers, Kennung der Fahrpedalposition-Steuerdruck, Kennung Steuerstrom-Steuerdruck vom HDD-Control und Kennung Steuerdruck-q_HM im Hydromotor, ausgeglichen.
Der Wert vom Schluckvolumen des Hydromotors q_HM, den die adaptive Regelung ermittelt, wird in einem nicht flüchtigen Speicherbereich der elektronischen Steuereinheit abgelegt.

### Bezugszeichen

- 1: Antriebsmaschine
- 2: Hydropumpe
- 3: Druckflüssigkeitsreservoir
- 4: Hauptsteuerventil
- 5: Hydromotor
- 6: Arbeitsleitung
- 7: Untersetzungsgetriebe
- 8: elektronische Steuereinheit
- 9: Sensor
- 10: Fahrpedal
- 11: Drehzahlsensor
- 12: Verzögerungswählschalter
- 13: Kriechgangschalter
- 14: Bremsschalter
- 15: Eingabemöglichkeit
- 16: Drehzahlsensor
- 17: Sensor
- 18: Linie
- 19: Linie
- 20: Linie

## Patentansprüche

1. Hydrostatisches Getriebe für ein mobiles Fahrzeug mit mindestens einer Hydropumpe (2) und wenigstens einem, in seinem Schluckvolumen verstellbaren Hydromotor (5), welcher an zwei Arbeitsleitungen (6) angeschlossen ist, wobei die Hydropumpe (2) Druckmittel aus einem Druckmittelreservoir (3) entnimmt, und über wenigstens eine Arbeitsleitung (6) dem Hydromotor (5) zuführt, und einem Bremsventil, welches es ermöglicht, einen Druckmittelstrom, welcher den Hydromotor (5) verläßt, zu begrenzen, **dadurch gekennzeichnet, dass** ein Sensor (11) eine Fahrzeuggeschwindigkeit bzw. eine Abtriebsdrehzahl, welche dieser Fahrzeuggeschwindigkeit entspricht, ermittelt, und einer elektronischen Steuereinheit (8) zuführt, welche in Abhängigkeit eines Geschwindigkeitswunsches eine diesem entsprechende Fahrzeuggeschwindigkeit bzw. Abtriebsdrehzahl errechnet und das Schluckvolumen des Hydromotors (5) so verstellt, dass die vom Sensor (11) ermittelte Fahrzeuggeschwindigkeit bzw. Abtriebsdrehzahl der errechneten Fahrzeuggeschwindigkeit bzw. Abtriebsdrehzahl nahezu entspricht, wobei bei einem Bremsvorgang, der Hydromotor so verstellt wird, dass ein zuvor definierter Verzögerungsgrad erreicht wird.

2. Hydrostatisches Getriebe nach Anspruch 1, **dadurch gekennzeichnet, dass** die elektronische Steuerung (8) den Hydromotor (5) so verstellt, dass die Verzögerung des Fahrzeugs einen konstanten, zuvor definierten Wert annimmt.

3. Hydrostatisches Getriebe nach Anspruch 2, **dadurch gekennzeichnet, dass** der zuvor definierte Wert veränderbar ist.

4. Hydrostatisches Getriebe nach Anspruch 2, **dadurch gekennzeichnet, dass** die Verzögerung anhand eines zuvor definierten Kennfeldes geregelt wird.

5. Hydrostatisches Getriebe nach Anspruch 1, **dadurch gekennzeichnet, dass** durch Betätigen einer Betriebsbremse (14) des Fahrzeugs der Hydromotor (5) automatisch so verstellt wird, dass die maximale, zuvor definierte Verzögerung erreicht wird.

6. Hydrostatisches Getriebe nach Anspruch 1, **dadurch gekennzeichnet, dass** dem Hydromotor (5) ein schaltbares Untersetzungsgetriebe (7) nachgeschaltet angeordnet ist und die elektronische Steuerung (8) die geschaltete Übersetzung berücksichtigt.

7. Hydrostatisches Getriebe nach Anspruch 1, **dadurch gekennzeichnet , dass** ein Steuersignal, mittels welchem der Hydromotor (5) verstellt wird, entsprechend angepaßt wird, wenn sich die aktuelle Geschwindigkeit der Soll-Geschwindigkeit annähert.

8. Hydrostatisches Getriebe nach Anspruch 1, **dadurch gekennzeichnet, dass** durch ein manuell betätigbares Signal (13) die elektronische Steuerung (8) den Hydromotor (5) auf seinem maximalen Schluckvolumen hält.

9. Hydrostatisches Getriebe nach Anspruch 1, **dadurch gekennzeichnet, dass** ein Sensor (16) die Temperatur der Hydraulikflüssigkeit ermittelt und die elektronische Steuerung (8) den Hydromotor (5) so verstellt, dass eine definierte Temperatur nicht überschritten wird.

10. Hydrostatisches Getriebe nach Anspruch 1, **dadurch gekennzeichnet , dass** ein minimal notwendiges Schluckvolumen des Hydromotors von der elektronischen Steuereinheit errechnet wird, das tatsächliche minimale Schluckvolumen mit diesem verglichen wird und anschließend eine adaptive Regelung das tatsächlich notwendige Schluckvolumen des Hydromotors ermittelt und die abgelegten Werte so lange verändert, bis eine Regelabweichung nahezu Null wird.

## Claims

1. Hydrostatic transmission for a mobile vehicle, with at least one hydraulic pump (2) and at least one hydraulic motor (5), the intake volume of which can be adjusted and which is connected to two working lines (6), and the hydraulic pump (2) draws hydraulic medium from a hydraulic medium reservoir (3) and conducts it to the hydraulic motor (5) via at least one working line (6), and a brake valve which enables a flow of hydraulic medium leaving the hydraulic motor (5) to be restricted, **characterised in that** a sensor (11) detects a vehicle speed or an output speed which corresponds to this vehicle speed and conducts it to an electronic control unit (8), which, as a function of a speed command, calculates a vehicle speed or output speed corresponding to it and adjusts the intake volume of the hydraulic motor (5) so that the vehicle speed or output speed detected by the sensor (11) virtually corresponds to the calculated vehicle speed or output speed, and during a braking operation, the hydraulic motor is adjusted so that a previously defined degree of deceleration is achieved.

2. Hydrostatic transmission as claimed in claim 1, **characterised in that** the electronic control unit (8) adjusts the hydraulic motor (5) so that the deceleration of the vehicle assumes a constant, previously defined value.

3. Hydrostatic transmission as claimed in claim 2, **characterised in that** the previously defined value is variable.

4. Hydrostatic transmission as claimed in claim 2, **characterised in that** the deceleration is regulated on the basis of a previously defined characteristic map.

5. Hydrostatic transmission as claimed in claim 1, **characterised in that** when a foot brake (14) of the vehicle is operated, the hydraulic motor (5) is automatically adjusted so that the maximum, previously defined deceleration is achieved.

6. Hydrostatic transmission as claimed in claim 1, **characterised in that** a shiftable reduction gear (7) is connected downstream of the hydraulic motor (5) and the electronic control unit (8) makes allowance for the selected gear ratio.

7. Hydrostatic transmission as claimed in claim 1, **characterised in that** a control signal by means of which the hydraulic motor (5) is adjusted is adapted accordingly when the instantaneous speed approaches the desired speed.

8. Hydrostatic transmission as claimed in claim 1, **characterised in that** the electronic control unit (8) maintains the hydraulic motor (5) at its maximum intake volume due to a manually activatable signal (13).

9. Hydrostatic transmission as claimed in claim 1, **characterised in that** a sensor (16) detects the temperature of the hydraulic fluid and the electronic control unit (8) adjusts the hydraulic motor (5) so that a defined temperature is not exceeded.

10. Hydrostatic transmission as claimed in claim 1, **characterised in that** a minimum intake volume needed by the hydraulic motor is calculated by the electronic control unit, the actual minimum intake volume is compared with it and the actual required intake volume of the hydraulic motor is then determined by an adaptive regulation and the stored values are varied until a regulation variance is virtually zero.

## Revendications

1. Transmission hydrostatique pour un véhicule mobile, comprenant au moins une pompe hydraulique (2) et au moins un moteur hydraulique (5) réglable en volume d'aspiration qui est raccordé à deux conduites de travail (6), la pompe hydraulique (2) prélevant un milieu de pression dans un réservoir de milieu de pression (3) et l'envoyant au moteur hydraulique (5) par l'intermédiaire d'au moins une conduite de travail (6), et une soupape de freinage qui permet de limiter un débit de milieu de pression qui sort du moteur hydraulique (5), **caractérisé e en ce qu'**un capteur (11) détermine une vitesse du véhicule ou une vitesse de rotation qui correspond à cette vitesse du véhicule, et la transmet à une unité de commande électronique (8) qui, en fonction d'un souhait de vitesse, calcule une vitesse du véhicule ou une vitesse de rotation de sortie correspondant à ce souhait, et règle le volume d'aspiration du moteur hydraulique (5) de telle manière que la vitesse du véhicule ou la vitesse de rotation de sortie, qui sont déterminées par le capteur (11), correspondent de très près à la vitesse calculée du véhicule ou à la vitesse de rotation de sortie calculée, tandis que, lors d'une opération de freinage, le moteur hydraulique est réglé de manière qu'on atteigne un degré de décélération préalablement défini.

2. Transmission hydrostatique selon la revendication 1,**caractérisée en ce que** la commande électronique (8) règle le moteur hydraulique (5) de telle manière que la décélération du véhicule prenne une valeur constante préalablement définie.

3. Transmission hydrostatique selon la revendication 2, **caractérisée en ce que** la valeur préalablement définie est variable.

4. Transmission hydrostatique selon la revendication 2, **caractérisée en ce que** la décélération est réglée d'après un diagramme préalablement défini.

5. Transmission hydrostatique selon la revendication 1, **caractérisée en ce que,** sous l'effet de l'actionnement d'un frein de service (14) du véhicule, le moteur hydraulique (5) est réglé automatiquement de manière que la décélération maximale préalablement définie soit atteinte.

6. Transmission hydrostatique selon la revendication 1, **caractérisée en ce qu**'un réducteur commandé (7) est monté en aval du moteur hydraulique (5), et en ce que la commande électronique (8) prend en compte la démultiplication enclenchée.

7. Transmission hydrostatique selon la revendication 1, **caractérisée en ce que,** lorsque la vitesse actuelle se rapproche de la vitesse de consigne, un signal de commande au moyen duquel le moteur hydraulique (5) est réglé est adapté en conséquence.

8. Transmission hydrostatique selon la revendication 1, **caractérisée en ce que**, sous l'effet d'un signal (13) pouvant être actionné manuellement, la commande électronique (8) maintient le moteur hydraulique (5) à son volume d'aspiration maximum.

9. Transmission hydrostatique selon la revendication 1, **caractérisée en ce qu'**un capteur (16) détermine la température du liquide hydraulique et la commande électronique (8) règle le moteur hydraulique (5) de manière qu'une température définie ne soit pas dépassée.

10. Transmission hydrostatique selon la revendication 1, **caractérisée en ce qu'**un volume d'aspiration minimal nécessaire du moteur hydraulique est calculé par l'unité de commande électronique, ce volume d'aspiration minimal réel y est comparé et, ensuite, une régulation adaptative détermine le volume d'aspiration du moteur hydraulique qui est effectivement nécessaire et modifie les valeurs mémorisées jusqu'à ce qu'un écart de régulation devienne presque nul.
